# EUROPEAN PATENT SPECIFICATION

(11) **EP 2 819 403 B1**
(45) Date of publication and mention of the grant of the patent: **01.08.2018**
(21) Application number: 13751258.8
(22) Date of filing: 23.01.2013
(51) Int. Cl.: H04N 5/775, H04N 9/804, H04N 21/426, H04N 21/433, H04N 21/4402, G11B 27/00, G11B 27/10, H04N 5/783, H04N 21/462, H04N 21/472, H04N 21/845, G11B 20/10

(54) **VIDEO OUTPUT DEVICE**
VIDEOAUSGABEVORRICHTUNG
DISPOSITIF DE SORTIE VIDÉO

(30) Priority: 21.02.2012 JP 2012034617
(43) Date of publication of application: 31.12.2014
(73) Proprietor: Panasonic Corporation, Kadoma-shi, Osaka 571-8501 (JP)
(72) Inventor: OKUDA, Tadayoshi, Osaka 540-6207 (JP)
(74) Representative: Eisenführ Speiser
(86) International application number: PCT/JP2013/000326
(87) International publication number: WO 2013/125158

(56) References cited:
- WO-A1-2009/104639
- JP-A- 2004 015 226
- JP-A- 2006 054 760
- JP-A- 2006 511 148
- JP-A- 2011 250 358
- US-A1- 2002 090 138
- US-A1- 2003 072 375
- US-A1- 2009 168 896
- US-B1- 6 233 017

## Description

### Technical Field

The present disclosure relates to a video output device operable to output an image with high grayscale.

### Background Art

JP 2009194758 A discloses a video recording device. The video recording device of JP 2009-194758 A captures an object and generates a plurality of video signals. In generating the plurality of video signals, the video recording device encodes one of them as a main TS, and the other as a sub TS. Then the video recording device converts the encoded sub TS into a null to masquerade as a null TS.

Thereby, this video recording device can record and transmit video contents represented by a plurality of video streams, by using a multiplex stream allowed to include at most one video stream and a null stream.

US 2009/0168896 A1 discloses a mobile video device includes a transceiver module that receives an independent video layer stream and at least one dependent video layer streams that require the independent video layer for decoding. A decoder module produces a decoded video signal from at least one separate video stream chosen, based on the device parameter, from the independent video layer stream and at least one dependent video layer streams. JP 2006054760 discloses a data decoder that is provided with a variable length decoding circuit for decoding encoded information of a pixel block as an encoding unit, a reverse quantization circuit for restoring a DCT coefficient from the decoded quantized DCT coefficient, a motion compensation circuit, a reference image memory for storing data of a reference image required for motion compensation, and an adder for adding encoded information such as a motion vector to the reference image. The encoded data received from an encoded data input part are decoded. A video image signal obtained by the
decoding is supplied to a pixel number converter. On this occasion, the motion information such as an encoding mode of the pixel block as an encoding unit separated by the variable length decoding circuit, the motion vector, the quantization information, the quantized DCT coefficient is transmitted to the pixel number converting part. The pixel number converting part converts the number of pixels by using the transmitted motion information if required.

### Summary of Invention

By the way, most of master data manufactured in a movie studio is recorded as high grayscale data with 10-bit grayscale or 12-bit grayscale. On the other hand, in a Blu-ray Disc (called "BD" hereafter) which is a video distribution standard for consumer use, video data is recorded with the grayscale
a BD, the grayscale of the recorded video data is more deteriorated than that of the original master data.

An object of the present disclosure is to provide a video output device operable to play back video image with high grayscale as high as that of master data.

The video output device according to the present disclosure includes a decoder operable to decode main video data containing grayscale data and sub video data of an image which is represented by the main video data, an interface operable to output either the main video data or the main video data combined with the sub video data decoded by the decoder, a controller for controlling the output device, wherein the video output device is configured to perform a resizing process on the decoded main video data, and wherein the sub video data includes data for complementing the grayscale data of the main video data. When the resizing process is not performed on the main video data, the controller controls the interface to output data obtained by combining the decoded main video data and the decoded sub video data. When the resizing process is performed on the main video data, the controller controls the interface to output only the decoded main video data.

According to the present disclosure, the main video data and the sub video data that complements the grayscale of an image which is represented by the main video data are combined with each other and the combined video data is output, so that it is possible to output an image with the same high grayscale as that of master data.

### Brief Description of Drawings

Fig. 1 is a block diagram illustrating an electrical configuration of a recorder.
Fig. 2 is block diagram illustrating a configuration of a microcomputer
Fig. 3 is a schematic view for describing a relationship between main video data and sub video data.
Fig. 4 is a flowchart for describing a play back operation of a BD.

### Description of Embodiments

Embodiments are described in detail below, with reference to the drawings. However, unnecessary detailed description may be omitted. For example, detailed descriptions of already well-known matters, or repeated descriptions of substantially the same configuration may be omitted. This is because unnecessary redundancy in the following description is avoided to facilitate the understanding by a person skilled in the art. The present inventor(s) provide the accompanying drawings and the following description so that a person skilled in the art can fully understand the present disclosure, and does not intend to limit the subject matter defined in the claims by the accompanying drawings and the following description.

As mentioned above, most of master data is recorded as high grayscale data with 10-bit or 12-bit grayscale, whereas in a BD which is a video distribution standard for consumer use, video data is recorded with the grayscale restricted to 8-bit. Therefore, when video data of the master data is recorded on a BD, the grayscale of the recorded video data is more deteriorated than that of the original master data.

In order to record the content of the master data to a BD with the grayscale of the master data, it is considered to individually perform an encoding process on sub video data for complementing missing grayscale as well as on conventional video data (main video data) with 8-bit grayscale, to record them on a disc. In order to output the video data having the grayscale of the master data from the BD to which video data is recorded in the above method, a video output device needs to operate as follows. Namely, the video output device needs to perform a decoding process on each of the main video data and sub video data, and combines the decoded main video data and the sub video data to obtain the original grayscale, and then output the combined data as video data with high grayscale. In addition, another method is also considered, which records video data by simply increasing the number of bits which can be processed by an encoder. However, in such a case, a play back process cannot be performed by a decoder capable of processing 8-bit grayscale which is in widespread use in consumer equipment, and it is difficult to maintain compatibility with BD on which video data is recorded with 8-bit grayscale.

In such a video output device, the decoder requires performance for simultaneously processing a plurality of data. However, depending on a usage status, a load of process, etc. of the decoder, the video output device cannot achieve both of the decoding process of the main video data and the decoding process of the sub video data. Thus, in such a case, an image to be output may not be correctly played back.

In consideration with the above-mentioned situation, an embodiment of a video output device is described below with reference to the drawings.

### 1. Embodiment 1

### 1-1. Overview

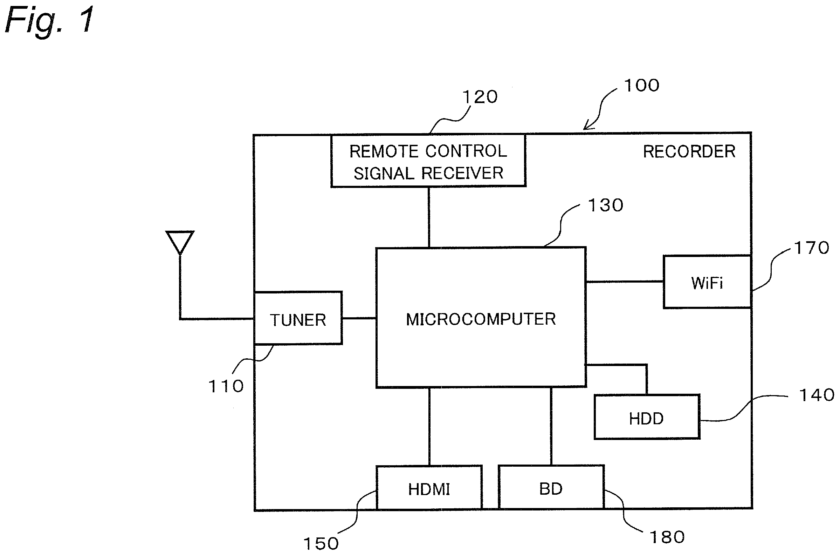

Fig. 1 is a block diagram illustrating a configuration of a recorder according to Embodiment 1. A recorder 100 can play back a BD with a BD drive 180. The BD stores main video data with normal 8-bit grayscale and sub video data for complementing grayscale of an image which is represented by the main video data. The recorder 100 combines the main video data and sub video data stored on the BD, and outputs the combined data, so that an image with high grayscale can be output.

In addition, the recorder 100 can perform a trick play, such as fast forwarding or rewinding of video data. When the trick play of video data is performed, processes by the decoder occur more frequently than when the normal play is performed. Therefore, in the trick play, decoding process performance is required to be higher than the normal play mode. In this case, if the decoding process performance is not high enough, when the decoder is requested to decode both the main video data and the sub video data, the load of processing exceeds the ability of the decoder, thereby the image may not be correctly played back.

Therefore, according to an example not belonging to the present invention, when playing back video data in a normal play mode, the recorder 100 combines the decoded main video data and the decoded sub video data with each other and outputs the combined data. On the other hand, when playing back video data in a trick play mode requiring ability of the decoder higher than that in the normal play mode, the recorder 100 outputs only the decoded main video data.

In this manner, by changing video data to be decoded in accordance with the play back mode, the recorder 100 improves a possibility of playing back correctly the image to be output.

In this Embodiment, a mode for playing back video data (frame(s)) in forward order at a normal play speed (one time speed) is called a "normal play mode", and a play back mode other than the normal play mode is called a "trick play mode".

### 1-2. Configuration of Recorder

A configuration of the recorder 100 according to the present embodiment is described in detail with reference to Fig. 1. The recorder 100 applies various kinds of processes with a microcomputer 130 on broadcasted data of program which is received by a tuner 110 to generate program data, and then records the generated program data on a HDD 140 or a BD within the BD drive 180. The recorder 100 transmits the program data recorded on the HDD 140 or data recorded on the BD to an external device through an HDMI 150 or a wireless communication module 170. Each of elements in the recorder 100 is described in detail as follows.

The tuner 110 extracts a radio wave of a channel which is selected by a user, among radio waves received by an antenna. The tuner 110 generates digital data which can be processed by the microcomputer 130, based on the extracted radio wave.

A remote control signal receiver 120 receives a control signal modulated to infrared light or an RF wave transmitted from a remote controller. For example, the remote control signal receiver 120 receives control signals for power ON/OFF, selection of a channel, start/stop of video recording, and so on. The remote control signal receiver 120 converts the received control signal into a digital signal which can be interpreted by the microcomputer 130.

The microcomputer 130 is a control module that controls the whole of the recorder 100. The microcomputer 130 is made by an SOC (System On Chip). Therefore, the microcomputer 130 is formed by integrating a CPU, a memory, and a data signal processing circuit thereinto. The microcomputer 130 has functions such as for encoding and decoding the video data.

The HDD 140 is a device for recording moving image (video) data, and so on. The HDD 140 records (stores) program data representing broadcasted programs received through the tuner 110, and so on, .

The HDMI 150 is an interface that connects the recorder 100 with an external device such as a television. The recorder 100 outputs program data represented by a program broadcast recorded on the HDD 140 through HDMI 150, and so on, to the external device.

The wireless communication module 170 is a communication module capable of carrying out wireless LAN communication. The wireless communication module 170 is compliant with the "IEEE802.11" standard, which is an international standard for wireless LAN communication. The wireless communication module 170 can communicate with the external device, and so on through an access point over IP (Internet Protocol).

The BD drive 180 is a drive for recording data on a BD, or reading data recorded on the BD.

### 1-3. Configuration of Microcomputer

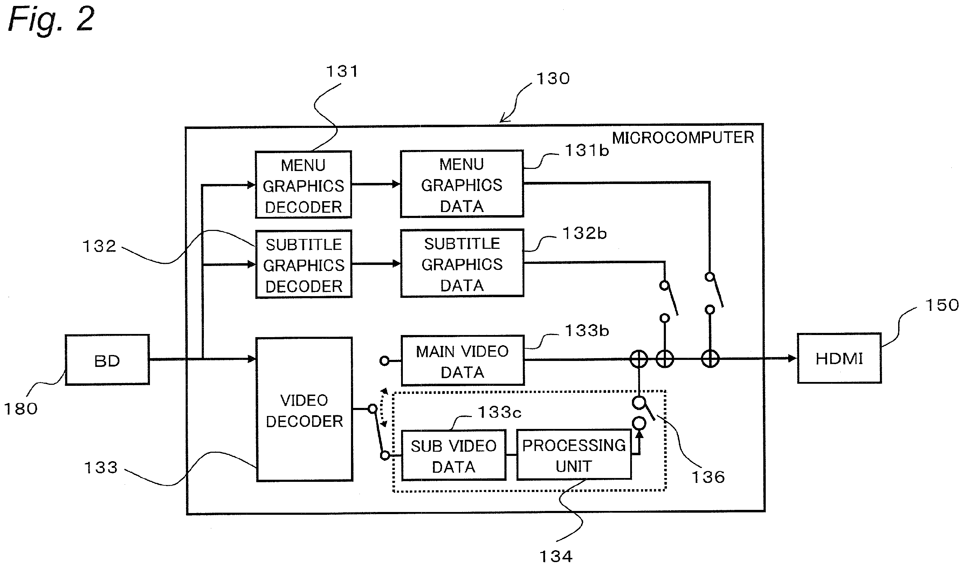

Only the function blocks to be used for playing back a BD out of function blocks included in the microcomputer 130 are described below with reference to Fig. 2. Fig. 2 is a block diagram illustrating function blocks used for playing back the BD.

The BD stores, as video data, menu graphics data that represents menus such as pop-up menus, subtitle graphics data that represents subtitles, and so on, as well as video data for a main content. Each video data read from the BD through the BD drive 180 is transmitted to a menu graphics decoder 131, a subtitle graphics decoder 132, and a video decoder 133.

The menu graphics decoder 131 is a decoder that decodes menu graphics data. The subtitle graphics decoder 132 is a decoder that decodes subtitle graphics data. The video decoder 133 is a decoder that decodes video data (including the main video data and the sub video data). The data decoded by the menu graphics decoder 131 and subtitle graphics decoder 132 are stored in buffer memories 131b and 132b, respectively.

The video decoder 133 transmits the decoded main video data and the decoded sub video data to different blocks respectively. The processing unit 134 performs a bit-shift operation on the sub video data. The main video data and sub video data decoded by the video decoder 133 are stored in buffer memories 133b and 133c, respectively.

It is determined according to a state of a switch 136 located behind the processing unit 134 whether to combine the decoded main video data and the decoded sub video data with each other. Namely, when the switch 136 behind the processing unit 134 is ON, video data with high grayscale obtained by combining the main video data and the sub video data is output from the HDMI 150. On the other hand, when the switch 136 behind the processing unit 134 is OFF, only the main video data is output from the HDMI 150.

### 1-4. Relationship Between Main Video Data and Sub Video Data

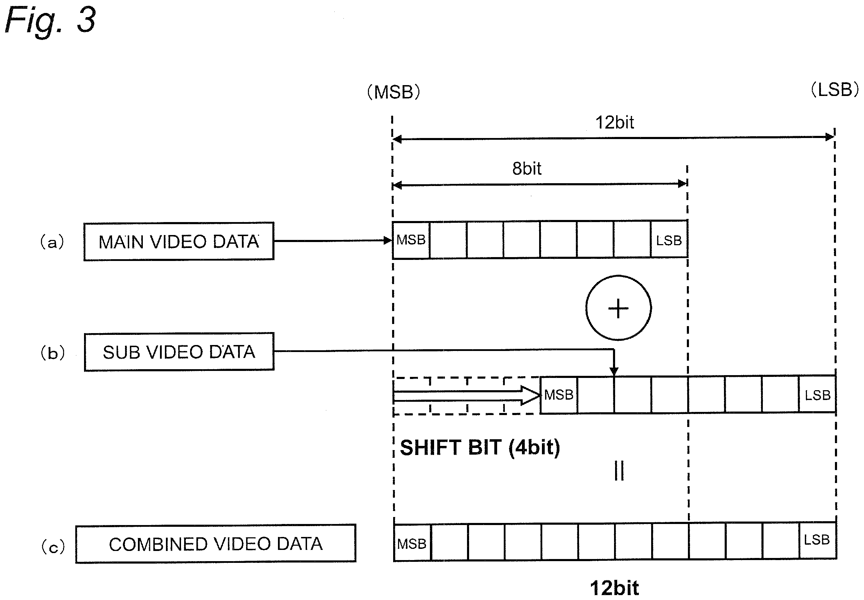

A relationship between the main video data and the sub video data recorded in a BD is described below. Fig. 3 is a schematic view for describing a relationship between the main video data and the sub video data recorded in the BD.

As shown in Fig 3(a), the main video data is normal video data of which grayscale is represented with 8-bit. On the other hand, although the grayscale of the sub video data is represented with 8-bit, the sub video data is video data only for complementing grayscale of the main video data. The sub video data is, specifically, video data representing a difference between the main video data and master data.

As shown in Fig. 3(b), the sub video data is shifted to the LSB (Least Significant Bit) side by 4 bits. This shifting process is performed by the processing unit 134. By addition of the sub video data shifted to the LSB side by 4 bits and the main video data, it is possible to generate video data with high grayscale represented with 12-bit grayscale.

It is noted that, on the BD, the main video data and the sub video data are recorded according to the MVC (Multi View Coding) format of MPEG4-AVC (MPEG-4 Part 10 Advanced Video Coding). Specifically, the main video data is recorded as a base view in MVC, and the sub video data is recorded as a dependent view in MVC. Here, the base view is independent video data which is decoded/encoded without referring to other view (namely, the dependent view). The base view is referred to for encoding/decoding process of the other view. On the other hand, the dependent view is video data which is decoded/encoded by referring to other view (namely, the base view). The dependent view is video data which can be encoded without including an intra-frame.

### 1-5. BD Playback Operation of Recorder

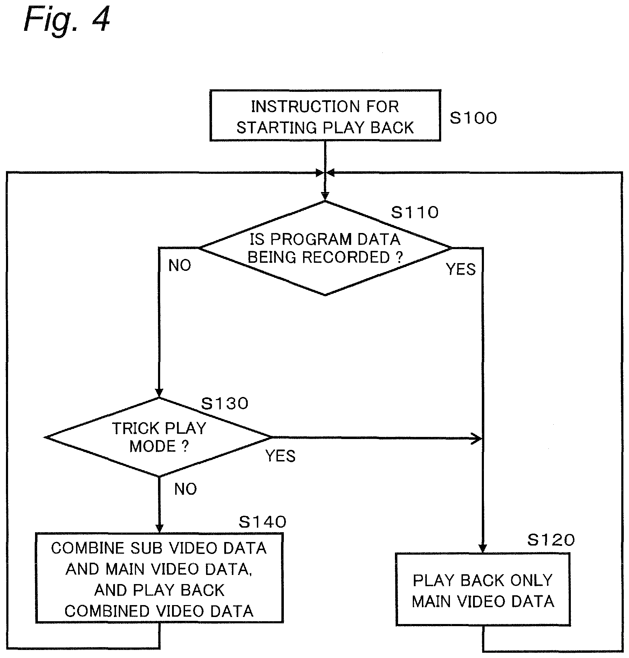

A play back operation of a BD by the recorder 100 is described with reference to Fig. 4. Fig. 4 is a flowchart for describing a play back operation of the BD in the recorder 100.

A user can instruct the recorder 100 to start play back of the BD by operating the remote controller. On receiving an instruction to start the play back (S100), the microcomputer 130 in the recorder 100 determines whether or not program data received through the tuner 110 is currently being recorded on the HDD 140 (S110).

When determining that the program data is being recorded on the HDD 140 (YES in S110), the microcomputer 130 causes the video decoder 133 to decode only the main video data among the video data recorded on the BD. The microcomputer 130 controls the switch 136 to output only the decoded main video data, and controls the HDMI 150 to output only the decoded main video data to the external device (S120). At this time, the microcomputer 130 (video decoder 133) does not decode the sub video data.

On the other hand, when determining that program data is not currently being recorded on the HDD 140 (NO in S110), the microcomputer 130 determines whether or not an instruction of the trick play such as fast-forward play back is received from the user (S130).

When determining that an instruction of the trick play is received (YES in S130), the microcomputer 130 causes the video decoder 133 to decode only the main video data among the video data recorded on the BD, and controls HDMI 150 to output only the decoded main video data (S120). At this time, the switch 136 is controlled to output only the decoded main video data.

On the other hand, when determining that an instruction of the trick play is not received (NO in S130), namely, in a case of playing back in the normal play mode, the microcomputer 130 causes the video decoder 133 to decode both of the main video data and the sub video data among the video data. Further, the microcomputer 130 controls the switch 136 such that the decoded main video data and the decoded sub video data is combined, and controls HDMI 150 to output the combined video data to the external device (S140).

In this manner, when playing back video data contained in the BD in the normal play mode but not in the trick play mode, the recorder 100 according to the present embodiment controls the HDMI 150 to output data obtained by combining the decoded main video data and the decoded sub video data. On the other hand, when playing back video data in the trick play mode requiring decoding process performance more than that of the normal play mode (e.g. when performing fast-forward play back which is one of the trick play), the recorder 100 controls the HDMI 150 to output only the decoded main video data. A reason for adopting such configurations is described below.

As an example of the trick play, fast-forward play back of double speed is considered. When performing such a trick play, the microcomputer 130 needs to perform video signal processes such as the decoding process on video data at twice the normal speed. Simultaneously, the speeds of the writing/reading process of the decoded video data to/from the buffers 133b, 133c are also twice the normal speeds. Therefore, when the ability of the microcomputer 130 for the decoding process, and so on is not so high or when the speeds of the writing/reading process of the decoded video data to/from the buffers 133b, 133c are not so high, not all video data may be output, and it may result in failure to correctly play back the image.

In addition, when performing the trick play such as fast-forward play back, only intra-frames within the compressed video data may be decoded. However, in this embodiment, the sub video data is recoded on the BD, as the dependent view in MVC. As mentioned above, the dependent view does not include intra-frames. Therefore, in a case of decoding only the intra-frames in the trick play, it may occur that the sub video data cannot be decoded at all in the trick play since the dependent view does not include intra-frames.

Therefore, when playing back video data contained in the BD at a normal speed not requiring high signal processing ability, the recorder 100 according to the present embodiment combines the main video data and the sub video data with each other to output the combined video data. According to this control, the image with high grayscale can be played back. On the other hand, when playing back video data at a speed faster than the normal speed (for example, fast-forward play back which is one of the trick play), the recorder 100 outputs only the main video data. In this manner, since only the main video data is processed, it is possible to avoid increase in a load of process of the microcomputer even when playing back image at a fast speed. As a result, it is possible to correctly play back the image, even when using a microcomputer of which video signal processing ability or access speed to the buffer are not so high. Namely, according to the above-mentioned configuration, it is possible to provide a recorder which can provide image with high grayscale by combining and outputting main video data and sub video data including data for complementing grayscale of an image represented by the main video data, and which further can correctly play back, with high probability, the image to be output.

In addition, in the recorder 100 according to the present embodiment, when video data is being recorded in the HDD 140 (YES in S110), the microcomputer 130 controls the HDMI 150 to output only the decoded main video data even when playing back video data in the normal play mode. A reason for adopting such configurations is described below.

When the recorder 100 receives a broadcast through the tuner 110 and records it, the microcomputer 130 once decodes the received video data (which is compressed in MPEG2, for example). The microcomputer 130 encodes the decoded video data in another format (for example, MPEG4-AVC), and records the encoded video data on the HDD 140. In this manner, when recording the video data on the HDD 140, the microcomputer 130 performs the decoding process and the encoding process. When the decode of the video data, the decode of the main video data, and the decode of the sub video data overlap for recording them on the HDD 140, it may occur that part of the video data cannot be decoded correctly.

Therefore, in the recorder 100 according to the present embodiment, when performing a play back operation during recording of video data on the HDD 140, the microcomputer 130 controls the HDMI 150 to output only the main video data even when playing back video data in the normal play mode. Thereby, it is possible to provide a recorder which can provide image with high grayscale by combining and outputting main video data and sub video data including data for complementing grayscale of an image represented by the main video data, and which further can correctly play back, with high probability, image to be output.

### 1-6. Effect, etc.

As mentioned above, the recorder 100 according to the present embodiment includes the video decoder 133 operable to decode main video data and sub video data including data for complementing grayscale of an image which is represented by the main video data, the HDMI 150 operable to output the main video data and/or sub video data decoded by the video decoder 133, and the microcomputer 130 for controlling the HDMI 150. When playing back video data in a normal play mode, the microcomputer 130 controls the HDMI 150 to output data obtained by combining the decoded main video data and the decoded sub video data. When playing back video data in a trick play mode which requires decoding process performance higher than that in the normal play mode, the microcomputer 130 controls the HDMI 150 to output only the decoded main video data.

According to the configuration as mentioned above, in the play back in the normal play mode, an image with high grayscale can be played back. In addition, in the play back in the trick play mode, the load of the decoding process can be decreased.

### 2. Other Embodiments

As described above, Embodiment 1 is described as an exemplification of the art disclosed in the present application. However, the art in the present disclosure is not limited thereto, but is also applicable to embodiments appropriately applied changes, replacements, additions, omissions, etc. Other embodiments are exemplified as follows.

In Embodiment 1, the main video data and the sub video data are recorded on the BD in accordance with the MVC format. However, the present disclosure is not necessarily limited to such a configuration. For example, each of the main video data and the sub video data may be separately recorded as independent video data. To be short, the main video data and the sub video data may be managed to be distinguished from each other.

In addition, in Embodiment 1, both of the main video data and the sub video data are recorded on the same BD. However, the present disclosure is not necessarily limited to such a configuration. For example, the main video data may be recorded on a BD, and the sub video data may be recorded on a memory card which can be inserted into a memory card slot (not illustrated). Alternatively, another configuration may be adopted as follows. Namely, the main video data may be recorded on a BD and the sub video data may be received from an external server via the wireless communication module 170. That is, the main video data and the sub video data may be separately recorded on different recording media.

Further, in Embodiment 1, when combining the main video data and the sub video data, video data with high grayscale of 12-bit grayscale is output. However, the present disclosure is not necessarily limited to such a configuration. For example, another configuration may be adopted as follows. Namely, when combining the main video data and the sub video data, video data with high grayscale of 10-bit grayscale may be output. In this case, the recorder 100 shifts the sub video data to the LSB side by 2 bits, and then adds the shifted sub video data to the main video data. Alternatively, a system may be adopted as follows. Namely, a bit-shift amount of the sub video data may be recorded in the BD. In this case, the recorder 100 can refer to information indicating the bit-shift amount in the BD, and can cause the processing unit 134 to perform a bit-shift operation on the sub video data.

Furthermore, in Embodiment 1, when the video data is being recorded in the HDD 140, only the main video data is output regardless of whether or not the trick play is being performed. However, the present disclosure is not necessarily limited to such a configuration. For example, the following configuration may be adopted. That is, in cases where the video data received through the tuner 110 is re-encoded and then recorded on the HDD 140, only the main video data may be output regardless of whether or not the trick play is being performed. And, in cases where the video data received through the tuner 110 is being directly recorded on the HDD 140 without performing the re-encoding, only the main video data may be output only when the trick play is being performed.

In addition, in Embodiment 1, the fast-forward play back is described as an example of the trick play mode. However, the present disclosure is not necessarily limited to such a configuration. For example, the trick play mode may be a mode for playing back video data (frames) in reverse order (rewind play back), or may be a mode for playing back video data in reverse order while slowing the play back speed down (reverse slow play back).

Further, in Embodiment 1, when video data is being recording, only the decoded main video data is output even when playing back the video data in the normal play mode. However, the present disclosure is not necessarily limited to such a configuration. For example, the following configuration may be adopted. That is, only when the video data is being recorded and the video data is being played back in the trick play mode, only the decoded main video data may be output. Namely, when the sub video data cannot be decoded while the main video data is being decoded, only the decoded main video data may be output. In addition, when the sub video data can be decoded while the main video data is being decoded, the decoded main video data and the decoded sub video data may be combined and the combined video data may be output.

Furthermore, some of the function blocks included in the microcomputer 130 shown in Fig. 2 may be included in another microcomputer different from the microcomputer 130.

In addition, the recorder 100 may have a function for performing a resizing process on each of the menu graphics data, subtitle graphics data and video data after decoding them, and may combine the respective resized data with each other to output the combined data to the external device through the HDMI 150. In such a case, when the resizing process is performed, only the main video data may be output, and when no resizing process is performed, the main video data and the sub video data may be combined and the combined video data may be output. In addition, the decoded video data may be subjected to an image quality adjustment process before combining the main video data with the sub video data. Similarly, in this case, when the image quality adjustment process is performed, only the main video data may be output, and when no image quality adjustment process is performed, the main video data and the sub video data may be combined and the combined video data may be output.

As described above, the embodiments are described as an exemplification of the art in the present disclosure. For this purpose, accompanying drawings and the detailed description are provided.

Accordingly, among the components described in the accompanying drawings and the detailed description, components which are unnecessary to solve the problem may be involved to exemplify the above-mentioned technology, as well as components which are necessary to solve the problem. Therefore, it should not immediately be construed that the unnecessary components are necessary as such unnecessary components are described in the accompanying drawings or the detailed description.

In addition, the embodiments as mentioned above are to exemplify the art in the present disclosure, and thus, it can be applied various kinds of changes, replacements, additions, omissions, and the like, in the scope of the claims.

### Industrial Applicability

According to the present disclosure, a video output device operable to output an image with high grayscale as high as that of master data. Therefore, the concept of the present disclosure can applied to a video output device operable to play back optical discs, such as a BD player or a BD recorder, and the like.

## Claims

1. A video output device (100) operable to play back and output an image with high grayscale comprising: an interface (150) that connects the video output device (100) with an external device; a controller (130) for controlling said interface (150),
**characterized by**
a decoder (133) operable to decode main video data containing normal grayscale data of an image which is represented by the main video data, and to decode sub video data including data for complementing said grayscale data of said main video data; wherein the interface (150) is operable to output either the main video data or the main video data combined with the sub video data decoded by the decoder;
the video output device (100) is configured to perform a resizing process on the decoded main video data;
when the resizing process is not performed on the main video data, the controller (130) controls the interface (150) to output data obtained by combining the decoded main video data and the decoded sub video data, and
when the resizing process is performed on the main video data, the controller (130)controls the interface (150) to output only the decoded main video data.

2. The video output device (100) according to claim 1, wherein
when the decoder (133) cannot decode the sub video data while the decoder (133) is decoding the main video data, the controller controls the interface (150) to output only the decoded main video data even when the resizing process is not performed on the main video data.

3. The video output device (100) according to claim 1, wherein the main video data and the sub video data are stored in one recording medium (140, 180).

4. The video output device (100) according to claim 1, wherein the main video data and the sub video data are separately stored in different recording media (140, 180).

## Patentansprüche

1. Videoausgabevorrichtung (100), die betriebsbereit ist, um ein Bild mit einem hohen Graustufenwert wiederzugeben und auszugeben, Folgendes umfassend:
eine Schnittstelle (150), die die Videoausgabevorrichtung (100) mit einer externen Vorrichtung verbindet;
eine Steuerung (130) zum Steuern der Schnittstelle (150),
**gekennzeichnet durch**
einen Dekodierer (133), betriebsbereit zum Dekodieren von Hauptvideodaten, die normale Graustufendaten eines Bildes enthalten, das durch die Hauptvideodaten repräsentiert wird, und zum Dekodieren von Subvideodaten, die Daten zum Ergänzen der Graustufendaten der Hauptvideodaten einschließen; wobei
die Schnittstelle (150) betriebsbereit ist, um entweder die Hauptvideodaten oder die Hauptvideodaten in Kombination mit den durch den Decodierer decodierten Subvideodaten auszugeben;
die Videoausgabevorrichtung (100) konfiguriert ist, um einen Größenänderungsprozess an den decodierten Hauptvideodaten durchzuführen;
wenn der Größenänderungsprozess an den Hauptvideodaten nicht durchgeführt wird, die Steuerung (130) die Schnittstelle (150) steuert, um Daten auszugeben, die durch Kombinieren der decodierten Hauptvideodaten und der decodierten Subvideodaten erhalten werden, und
wenn der Größenänderungsprozess der Hauptvideodaten ausgeführt wird, die Steuerung (130) die Schnittstelle (150) steuert, um nur die decodierten Hauptvideodaten auszugeben.

2. Videoausgabevorrichtung (100) nach Anspruch 1, wobei,
wenn der Decoder (133) die Subvideodaten nicht decodieren kann, während der Decoder (133) die Hauptvideodaten dekodiert, die Steuerung die Schnittstelle (150) steuert, um nur die decodierten Hauptvideodaten auszugeben, selbst wenn der Größenänderungsprozess an den Hauptvideodaten nicht durchgeführt wird.

3. Videoausgabevorrichtung (100) nach Anspruch 1, wobei die Hauptvideodaten und die Subvideodaten in einem Aufzeichnungsmedium (140, 180) gespeichert sind.

4. Videoausgabevorrichtung (100) nach Anspruch 1, wobei die Hauptvideodaten und die Subvideodaten in unterschiedlichen Aufzeichnungsmedien (140, 180) getrennt gespeichert sind.

## Revendications

1. Dispositif de sortie vidéo (100) exploitable pour lire et faire sortir une image avec une échelle des gris importante, comprenant :
une interface (150) qui raccorde le dispositif de sortie vidéo (100) à un dispositif externe ;
un contrôleur (130) pour contrôler ladite interface (150),
**caractérisé par** un décodeur (133) exploitable pour décoder des données vidéo principales contenant des données d'échelle des gris normale d'une image qui est représentée par les données vidéo principales et pour décoder des sous-données vidéo comprenant des données pour complémenter lesdites données d'échelle des gris desdites données vidéo principales ;
dans lequel l'interface (150) peut être exploitée pour faire sortir les données vidéo principales ou les données vidéo principales combinées avec les sous-données vidéo décodées par le décodeur ;
le dispositif de sortie vidéo (100) est configuré pour réaliser un processus de redimensionnement pour les données vidéo principales décodées ;
lorsque le processus de redimensionnement n'est pas réalisé pour les données vidéo principales, le contrôleur (130) contrôle l'interface (150) pour faire sortir des données obtenues en combinant les données vidéo principales décodées et les sous-données vidéo décodées, et
lorsque le processus de redimensionnement est réalisé pour les données vidéo principales, le contrôleur (130) contrôle l'interface (150) pour faire sortir seulement les données vidéo principales décodées.

2. Dispositif de sortie vidéo (100) selon la revendication 1, dans lequel
lorsque le décodeur (133) ne peut pas décoder les sous-données vidéo alors que le décodeur (133) est en train de décoder les données vidéo principales, le contrôleur contrôle l'interface (150) pour faire sortir seulement les données vidéo principales décodées même lorsque le processus de redimensionnement n'est pas réalisé pour les données vidéo principales.

3. Dispositif de sortie vidéo (100) selon la revendication 1, dans lequel les données vidéo principales et les sous-données vidéo sont stockées sur un support d'enregistrement (140, 180).

4. Dispositif de sortie vidéo (100) selon la revendication 1, dans lequel les données vidéo principales et les sous-données vidéo sont stockées séparément sur des supports d'enregistrement (140, 180) différents.
